# EUROPÄISCHE PATENTSCHRIFT

(11) **EP 4 341 141 B1**
(45) Veröffentlichungstag und Bekanntmachung des Hinweises auf die Patenterteilung: **05.03.2025**
(21) Anmeldenummer: 22724055.3
(22) Anmeldetag: 21.04.2022
(51) Int. Cl.: B60W 30/16

(54) **FAHRASSISTENZSYSTEM**
DRIVING ASSISTANCE SYSTEM
SYSTÈME D'AIDE À LA CONDUITE

(30) Priorität: 21.05.2021 DE 102021113344
(43) Veröffentlichungstag der Anmeldung: 27.03.2024
(73) Patentinhaber: Bayerische Motoren Werke Aktiengesellschaft, 80809 München (DE)
(72) Erfinder: VELTEN, Thomas, 81371 München (DE)
(86) Internationale Anmeldenummer: PCT/EP2022/060482
(87) Internationale Veröffentlichungsnummer: WO 2022/242981

(56) Entgegenhaltungen:
- EP-A1- 3 335 955
- EP-A1- 3 800 099
- DE-T5- 112018 005 415
- US-A1- 2020 233 414

## Beschreibung

Die vorliegende Erfindung betrifft ein Fahrassistenzsystem für ein Kraftfahrzeug, wobei das Fahrassistenzsystem ausgestaltet ist, um eine Längsführung des Kraftfahrzeugs durch Ausgabe einer Soll-Beschleunigung an das Kraftfahrzeug automatisiert zu regeln, und ein Kraftfahrzeug mit dem Fahrassistenzsystem.

Gattungsgemäße Fahrassistenzsysteme, die ausgestaltet sind, um eine Längsführung eines Kraftfahrzeugs, insbesondere eines Automobils, durch Ausgabe einer Soll-Beschleunigung an das Kraftfahrzeug automatisiert zu regeln, sind im Allgemeinen aus dem Stand der Technik bekannt.

Solche Fahrassistenzsysteme können Teil eines sog. Abstandsregeltempomats sein, bei dem eine Geschwindigkeitsregelanlage bei einer Bestimmung einer Soll-Beschleunigung einen Abstand zu einem vorausfahrenden Fahrzeug als Rückführ- und Regelgröße zusätzlich zu einer vom Fahrer gewünschten Geschwindigkeit des Kraftfahrzeugs berücksichtigt.

DE 10 2019 214 121 A1, US 2019/315355 A1 und DE 10 2019 200 209 A1 beschreiben jeweils gattungsgemäße Fahrassistenzsystem.

In der DE 10 2019 214 121 A1 ist ein Verfahren zum Betrieb eines Fahrerassistenzsystems eines Ego-Fahrzeuges, insbesondere eines ACC-Systems, beschrieben, bei dem zur Führung des Ego-Fahrzeuges eine Stellgröße herangezogen wird, deren Sollwert anhand von relativen fahrdynamischen Messwerten des Ego-Fahrzeuges zu einem vorausfahrenden Fahrzeug ermittelt wird, wobei eine Zeitlückenregelung zwischen dem Ego-Fahrzeug und einem ersten vorausfahrenden Fahrzeug und eine Zeitlückenregelung zwischen dem Ego-Fahrzeug und einem zweiten vorausfahrenden Fahrzeug erfolgt, aus der ersten Zeitlückenregelung eine erste Stellgrößenanforderung und aus der zweiten Zeitlückenregelung eine zweite Stellgrößenanforderung abgeleitet wird, und die finale Stellgrößenanforderung aus einer Arbitrierung der ersten und zweiten Stellgrößenanforderung abgeleitet wird.

US 2019/315355 A1 beschreibt eine Fahrtregelungsvorrichtung für ein Fahrzeug mit einer Zielerfassungseinheit und einer Folgesteuerungseinheit. Die Fahrtregelungsvorrichtung umfasst eine Bestimmungseinheit, die ausgestaltet ist, um während einer Ausführung einer Folgesteuerung zu bestimmen, ob ein Kleinfahrzeug-Schaltzustand, in dem ein zu folgendes Ziel ein Kleinfahrzeug ist, aufgetreten ist oder nicht; eine Speichereinheit für einen oberen Grenzwert, die so ausgestaltet ist, dass sie eine Zielbeschleunigung als den oberen Grenzwert speichert, die vor der Bestimmung des Kleinfahrzeug-Schaltzustands durch die Bestimmungseinheit unter einer Bedingung eingestellt wird, bei der die Bestimmungseinheit bestimmt, dass der Kleinfahrzeug-Schaltzustand aufgetreten ist; und eine Zielbeschleunigungs-Einstelleinheit, die so ausgestaltet ist, dass sie die Zielbeschleunigung solange auf einen Wert einstellt, der gleich oder niedriger als der in der Speichereinheit gespeicherte obere Grenzwert ist, bis die für das geschaltete Kleinfahrzeug als dem zu folgenden Ziel ausgeführte Folgesteuerung endet.

Die DE 10 2019 200 209 A1 betrifft ein Verfahren zur Auswahl des Zielobjekts für eine automatische Abstandsregelung eines einspurigen Kraftfahrzeugs, bei welchem mittels einer Umgebungssensorik das Vorhandensein eines auf derselben Fahrspur unmittelbar vorausfahrenden zweiten einspurigen Kraftfahrzeugs und ein dem zweiten einspurigen Kraftfahrzeug unmittelbar vorausfahrenden dritten einspurigen Kraftfahrzeugs detektiert wird, wobei der seitliche Versatz des zweiten einspurigen Kraftfahrzeugs und des dritten einspurigen Kraftfahrzeugs gegenüber dem einspurigen Kraftfahrzeug ermittelt wird und abhängig von wenigstens einem der seitlichen Versätze das Zielobjekt für das Verfahren zur Abstandsregelung ausgewählt wird.

Dokument 3 800 099 A1 offenbart ein sich neigendes Fahrzeug, das eine Auswahlbetriebseinheit umfasst, die eingerichtet ist, einen Zielvorgängerfahrzeug-Auswahlbetrieb zu empfangen, durch den es einem Fahrer ermöglicht wird, direkt oder indirekt mindestens ein Zielvorgängerfahrzeug unter den Vorgängerfahrzeugen im Erfassungsbereich eines Vorgängerfahrzeugdetektors auszuwählen, der in dem sich neigenden Fahrzeug vorgesehen ist, und wobei die Anzahl des mindestens einen Zielvorgängerfahrzeugs kleiner als die Anzahl der Vorgängerfahrzeuge ist. Bei der Abstandsregelung zwischen den Fahrzeugen steuert ein Steuergerät des geneigten Fahrzeugs die Beschleunigung des Basisfahrzeugs in der Vorwärtsrichtung des Fahrzeugs auf der Grundlage des Abstands in der Vorwärts-Rückwärts-Richtung des Fahrzeugs zwischen dem Basisfahrzeug und jedem des mindestens einen vorausfahrenden Zielfahrzeugs, das direkt oder indirekt von dem Fahrer unter Verwendung der Auswahlbetriebseinheit ausgewählt wird.

Dokument EP 3 335 955 A1 offenbart ein sich neigendes Fahrzeug mit einer Einheit zur Erfassung eines schrägen Abstands zwischen Fahrzeugen und einer aktiven Fahrunterstützungs-Steuereinheit. Die Einheit zur Erfassung eines schrägen Abstands zwischen Fahrzeugen ist eingerichtet, um den schrägen Abstand zwischen Fahrzeugen zu erfassen, der dem Abstand zwischen dem sich neigenden Fahrzeug und einem schräg benachbarten Fahrzeug entspricht. Die aktive Fahrunterstützungs-Steuereinheit des sich neigenden Fahrzeugs ist eingerichtet, um den Fahrer aktiv zu unterstützen, indem sie einen Beschleunigungsregler in Übereinstimmung mit dem schrägen Fahrzeugabstand steuert, während der Ruck in der Fahrtrichtung kleiner als der Maximalwert des durch den Beschleunigungsregler erzeugbaren Rucks und größer als der Minimalwert des durch den Beschleunigungsregler erzeugbaren Rucks gehalten wird. Darüber hinaus steuert die aktive Fahrunterstützungs-Steuereinheit den Beschleunigungsregler so, dass die Beziehung zwischen der Geschwindigkeit und der verstrichenen Zeit in einem frühen Stadium der Geschwindigkeitsänderung nichtlinear ist.

Dokument DE 11 2018 005 4515 T1 offenbart ein Steuergerät und ein Steuerungsverfahren, wobei der Fahrbetrieb eines Motorrades durch den Fahrer angemessen unterstützt werden kann. Das Steuergerät umfasst einen Abschnitt zum Bestimmen eines nachzufolgenden Fahrzeugs für die adaptive Geschwindigkeitsregelung, einen Abschnitt zum Erhalten einer Fahrzeugpositionsinformation, welcher eine relative Positionsinformation des nachzufolgenden Fahrzeugs zum fahrenden Motorrad erhält, einen Abschnitt zum Einstellen einer Steuerungsgröße für die adaptive Geschwindigkeitsregelung, einen Ausführungsabschnitt, der das Motorrad die adaptive Geschwindigkeitsregelung ausführen lässt, und einen Abschnitt zum Erhalten einer Streifen-Positionsinformation, der eine relative Positionsinformation einer Streifengrenze zum fahrenden Motorrad erhält, wobei der Abschnitt zum Bestimmen eines nachzufolgenden Fahrzeugs das nachzufolgende Fahrzeug anhand der im Abschnitt zum Erhalten einer Streifen-Positionsinformation erhaltenen Streifen-Positionsinformation bestimmt.

Im Allgemeinen liegt den herkömmlichen gattungsgemäßen Fahrassistenzsystemen, insbesondere bei einem Einsatz im Automobil, nachfolgend beschriebener Aufbau zugrunde.

Das herkömmliche Fahrassistenzsystem weist regelmäßig einen Regler mit drei Regelinstanzen mit individuell angepasster Parametrisierung auf. Eine erste Regelinstanz, die als "Vordermann-Regler" bezeichnet werden kann, ist für ein direktes Zielobjekt, (d.h. das nächste Objekt zum Kraftfahrzeug in dessen Fahrschlauch), eine zweite Regelinstanz, die auch als "Vor-Vordermann-Regler" bezeichnet werden kann, ist für das Vor-Vorderfahrzeug (d.h. das übernächste Objekt zum Kraftfahrzeug in dessen Fahrschlauch), und eine dritte Regelinstanz, die auch als "Multiobjekt-Regler" bezeichnet werden kann, ist für Nachbarspurobjekte und/oder einscherende Objekte (d.h. Objekte, die sich im Fahrschlauch des Kraftfahrzeugs befinden) vorgesehen.

Nachteilig daran ist, dass im Falle von zwei vorausfahrenden im Fahrschlauch nebeneinander fahrenden Objekten, wie beispielsweise Motorrädern, die zweite Regelinstanz (sog. "Vor-Vordermann-Regler", s. oben) für das zweite Objekt nicht zielgerichtet genutzt werden kann, da bei der zweiten Regelinstanz ein normaler Mindestabstand zwischen zwei PKWs vorausgesetzt wird.

Insbesondere in diesem Fall, bei dem sich vor dem Kraftfahrzeug mehrere Motorräder in einer Fahrspur befinden und diese Motorräder mit geringem Abstand zueinander oder überlappend/nebeneinander fahren, kann daher mit dem herkömmlichen Aufbau bei einem für Motorräder typischen spontanen bzw. nervösen Beschleunigungsverhalten kein harmonisches Folgen der Motorradkolonne erreicht werden und/oder aufgrund dieser meist dynamischen Motorradbewegungen ein ungewolltes bzw. unrundes Bremsen auftreten.

Vor dem Hintergrund dieses Standes der Technik besteht die Aufgabe der vorliegenden Erfindung darin, eine Vorrichtung anzugeben, welche geeignet ist, zumindest die oben genannten Nachteile des Standes der Technik zu überwinden.

Gelöst wird die Aufgabe durch die Merkmale des unabhängigen Anspruchs. Die Unteransprüche haben bevorzugte Weiterbildungen der Erfindung zum Inhalt.

Demnach wird ein Fahrassistenzsystem für ein Kraftfahrzeug bereitgestellt, wobei das Fahrassistenzsystem ausgestaltet ist, eine Längsführung des Kraftfahrzeugs durch Ausgabe einer Soll-Beschleunigung an das Kraftfahrzeug automatisiert zu regeln.

Bei dem Fahrassistenzsystem kann es sich um einen Teil eines Abstandsregeltempomats oder um den Abstandsregeltempomat selbst handeln.

Der erste Beschleunigungsregler kann auch als Vordermann-Regler (s. oben) bezeichnet werden und damit der oben beschriebenen ersten Regelinstanz entsprechen.

Bei der Fahrspur kann es sich um eine tatsächlich physisch ausgebildete Fahrspur und/oder um einen Fahrschlauch handeln, der entlang einer geplanten Trajektorie des Kraftfahrzeugs ausgebildet ist.

Der zweite Beschleunigungsregler ist zudem ausgestaltet, um basierend auf einem vorbestimmten dritten Sollabstand des Kraftfahrzeugs zu einem vorbestimmten dritten Objekt, das auf einer anderen Fahrspur wie das Kraftfahrzeug fährt und/oder von der anderen Fahrspur auf dieselbe Fahrspur wie das Kraftfahrzeug wechselt, eine dritte Soll-Beschleunigung des Kraftfahrzeugs zu bestimmen.

Der zweite Beschleunigungsregler kann auch als Multiobjekt-Regler (s. oben) bezeichnet werden und damit der oben beschriebenen dritten Regelinstanz entsprechen.

Zusätzlich zu dem Funktionsumfang des herkömmlichen Multiobjekt-Reglers, der für Nachbarspurobjekte oder einscherende Objekte vorgesehen ist, ist der zweite Beschleunigungsregler jedoch ausgestaltet, um als Vordermann-Regler für das zweite sich im Fahrschlauch befindliche Objekt (zweite einspurige Kraftfahrzeug) zu dienen.

Mit anderen Worten, das Fahrassistenzsystem weist zumindest zwei Regelinstanzen mit zumindest teilweise individuell angepasster Parametrisierung auf. Eine der herkömmlichen ersten Regelinstanz entsprechende Regelinstanz, die als "Vordermann-Regler" bezeichnet werden kann, ist für ein direktes Zielobjekt, (d.h. das nächste Objekt zum Kraftfahrzeug in dessen Fahrschlauch) vorgesehen. Eine der herkömmlichen dritten Regelinstanz entsprechende Regelinstanz, die auch als "Multiobjekt-Regler" bezeichnet werden kann, ist für Nachbarspurobjekte oder einscherende Objekte (d.h. Objekte, die sich nicht im Fahrschlauch des Kraftfahrzeugs befinden) und zusätzlich für das zweite neben dem ersten im Fahrschlauch fahrende zweiten Objekt vorgesehen.

Das Fahrassistenzsystem weist eine erste Soll-Beschleunigung-Bestimmungseinheit auf, die ausgestaltet ist, um basierend auf der ersten, der zweiten und der dritten Soll-Beschleunigung die an das Kraftfahrzeug auszugebende Soll-Beschleunigung zu bestimmen.

Hier wird also vorgeschlagen zumindest vorübergehend die dritte Regelinstanz bzw. den Multiobjekt-Regler für das weitere bzw. zweite Objekt im Fahrschlauch zu nutzen.

Insbesondere in dem oben beschriebenen Fall, bei dem sich vor dem Kraftfahrzeug mehrere Motorräder in einer Fahrspur befinden und diese Motorräder mit geringem Abstand zueinander oder überlappend/nebeneinander fahren, kann dadurch selbst bei einem für Motorräder typischen spontanen bzw. nervösen Beschleunigungsverhalten ein harmonisches Folgen der Motorradkolonne erreicht und/oder aufgrund dieser meist dynamischen Motorradbewegungen ein ungewolltes bzw. unrundes Bremsen des Kraftfahrzeugs vermieden werden.

Dies kann zudem gemäß dem obigen Aufbau des Reglers bzw. des Fahrassistenzsystems, insbesondere wegen der Doppel-Funktion des Multiobjekt-Reglers, erreicht werden, ohne dass dafür zweimal die erste Regelinstanz bzw. der Vordermann-Regler inklusive Parametrierung bereitgestellt werden muss.

Es wird also eine Lösung vorgeschlagen, die mit relativ wenig zusätzlichem Absicherungs- und Applikationsaufwand basierend auf dem oben beschriebenen herkömmlichen Regleraufbau implementiert werden kann.

Gemäß der vorliegenden Erfindung, handelt es sich bei dem vorbestimmten ersten und dem vorbestimmten zweiten Objekt jeweils um ein einspuriges Kraftfahrzeug, insbesondere ein Motorrad.

Der erste und der zweite Beschleunigungsregler können ausgestaltet sein, um jeweils eine im Wesentlichen selbe Parametrisierung zur Bestimmung der ersten und der zweiten Soll-Beschleunigung zu nutzen.

Das heißt, die Parametrierung und der Sollabstand des Multiobjekt-Reglers können im Falle der Kolonnenfahrt der Parametrisierung und dem Sollabstand des Vordermann-Reglers entsprechen. Das Fahrassistenzsystem kann einen dritten Beschleunigungsregler aufweisen, der ausgestaltet ist, um basierend auf einem vorbestimmten vierten Sollabstand des Kraftfahrzeugs zu einem vorbestimmten vierten Objekt, das auf derselben Fahrspur wie das Kraftfahrzeug und vor dem vorbestimmten ersten und dem vorbestimmten zweiten einspurigen Kraftfahrzeug fährt, eine vierte Soll-Beschleunigung des Kraftfahrzeugs zu bestimmen.

Es kann also auch die der herkömmlichen zweiten Regelinstanz entsprechende Regelinstanz, die auch als "Vor-Vordermann-Regler" bezeichnet werden kann, bereitgestellt werden, wobei diese für das Vor-Vorderfahrzeug (d.h. das übernächste Objekt zum Kraftfahrzeug in dessen Fahrschlauch) vorgesehen ist.

Das Fahrassistenzsystem kann eine zweite Soll-Beschleunigung-Bestimmungseinheit aufweisen, die ausgestaltet ist, um eine fünfte Soll-Beschleunigung des Kraftfahrzeugs basierend auf der ersten und der vierten Soll-Beschleunigung zu bestimmen.

Die erste Soll-Beschleunigung-Bestimmungseinheit kann ausgestaltet sein, um die an das Kraftfahrzeug auszugebende Soll-Beschleunigung basierend auf der fünften Soll-Beschleunigung zu bestimmen.

Das heißt, der ersten Soll-Beschleunigung-Bestimmungseinheit kann eine zweite Soll-Beschleunigung-Bestimmungseinheit vorgeschaltet sein, die als Eingänge die von dem Vordermann-Regler und dem Vor-Vordermann-Regler bestimmten Regelgrößen bzw. Beschleunigungen erhält und basierend darauf eine weitere Regelgröße zu der ersten Soll-Beschleunigung-Bestimmungseinheit ausgibt.

Die erste Soll-Beschleunigung-Bestimmungseinheit kann ausgestaltet sein, um die an das Kraftfahrzeug auszugebende Soll-Beschleunigung basierend auf einer Minimumauswahl zu bestimmen.

Die erste Soll-Beschleunigung-Bestimmungseinheit kann also die kleinste empfangene Regelgröße bzw. Beschleunigung an das Kraftfahrzeug als die Regelgröße ausgeben.

Der zweite Beschleunigungsregler kann ausgestaltet sein, um die zweite Soll-Beschleunigung ausschließlich dann zu bestimmen, wenn kein vorbestimmtes drittes Objekt vorhanden ist.

Das heißt, die Bedingung dafür, dass der Multiobjekt-Regler im Rahmen seiner Doppelfunktion als zweiter Vordermann-Regler agiert, kann sein, dass der Multiobjekt-Regler aktuell kein Nachbarspurobjekt zur Regelung hat.

Ferner wird ein Kraftfahrzeug, insbesondere ein Automobil, aufweisend das oben beschriebene Fahrassistenzsystem bereitgestellt.

Das oben mit Bezug zum Fahrassistenzsystem Beschriebene gilt analog auch für das Kraftfahrzeug und umgekehrt.

Das Kraftfahrzeug kann eine zu dem Fahrassistenzsystem verbundene Objekterkennungseinheit aufweisen, die ausgestaltet ist, um die vorbestimmten einspurigen Kraftfahrzeuge in einem Umfeld des Kraftfahrzeugs zu erkennen.

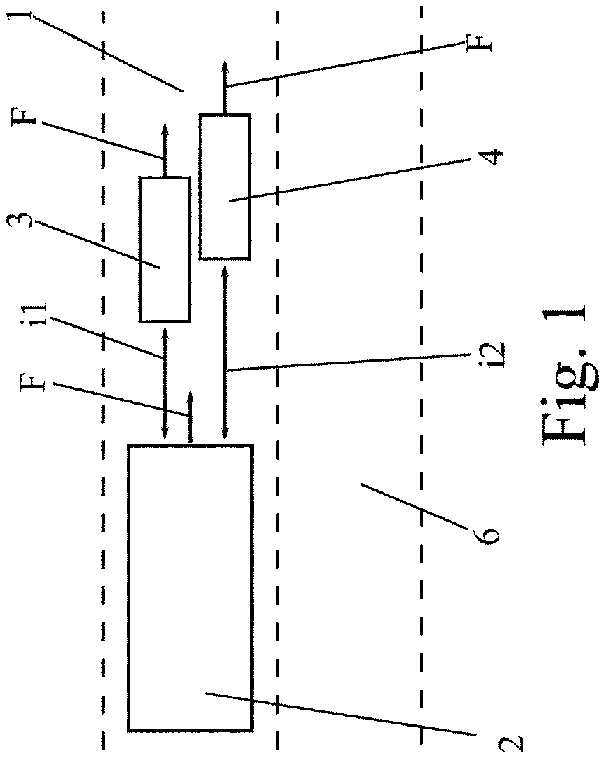

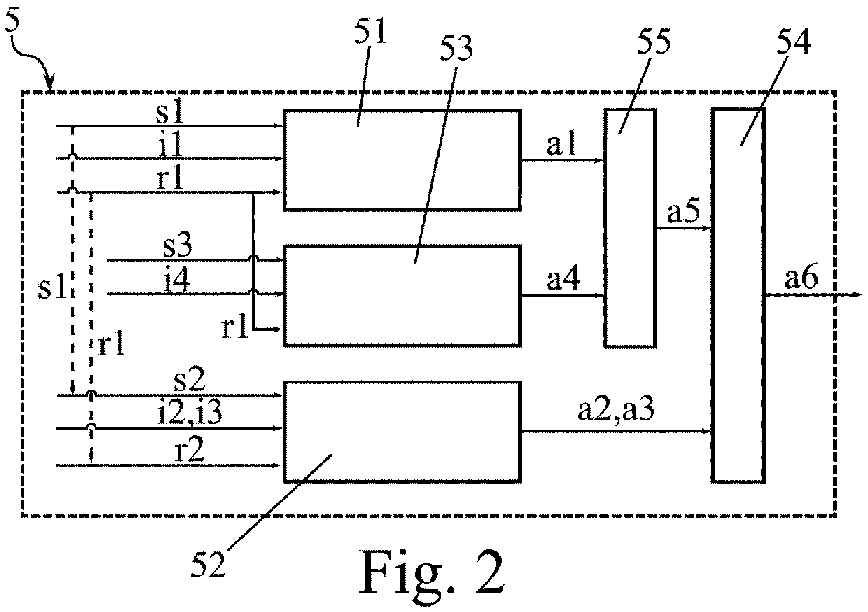

Nachfolgend wird eine Ausführungsform mit Bezug zu Figuren 1 und 2 beschrieben.
- Fig. 1: zeigt schematisch zu Erklärungszwecken eine Fahrsituation mit einem Kraftfahrzeug und zwei auf im Wesentlichen gleicher Höhe vorausfahrenden Objekten, und
- Fig. 2: zeigt ein Fahrassistenzsystem des Kraftfahrzeugs gemäß der Ausführungsform.

In Figur 1 ist eine Fahrspur 1 gezeigt, auf der sich ein Kraftfahrzeug 2 mit zwei sich in Fahrtrichtung F vor dem Kraftfahrzeug 2 fahrenden Objekten, bei denen es sich hier jeweils um ein einspuriges Kraftfahrzeug, genauer gesagt ein Motorrad 3, 4, handelt. Auf einer weiteren Fahrspur 6, die parallel zur Fahrspur 1 verläuft, befinden sich keine Kraftfahrzeuge.

Das Kraftfahrzeug 2 weist das in Figur 2 schematisch dargestellte Fahrassistenzsystem 5 auf, das ausgestaltet ist, um eine Längsführung des Kraftfahrzeugs 2 und damit eine Geschwindigkeit des Kraftfahrzeugs 2 in der Fahrtrichtung F durch Ausgabe einer Soll-Beschleunigung a6 an das Kraftfahrzeug 2 automatisiert zu regeln.

Dazu weist das Fahrassistenzsystem 5 drei Beschleunigungsregler 51, 52, 53 auf. Der erste Beschleunigungsregler 51 wird nachfolgend als Vordermann-Regler bezeichnet. Der zweite Beschleunigungsregler 52 wird nachfolgend als Multiobjekt-Regler bezeichnet. Der dritte Beschleunigungsregler 53 wird nachfolgend als Vor-Vordermann-Regler bezeichnet.

Der Vordermann-Regler 51 und der Vor-Vordermann-Regler 53 sind über eine zweite Soll-Beschleunigung-Bestimmungseinheit 55 zu einer ersten Soll-Beschleunigung-Bestimmungseinheit 54 verbunden, zu der auch der Multiobjektregler 52 verbunden ist.

Der Vordermann-Regler 51 ist in der in Figur 1 dargestellten Situation ausgestaltet, um basierend auf:
- einem vorbestimmten Sollabstand s1 des Kraftfahrzeugs 2 zu dem ersten Motorrad 3, das auf derselben Fahrspur 1 wie das Kraftfahrzeug 2 und direkt vor dem Kraftfahrzeug 2 fährt,
- einem Ist-Abstand i1 des ersten Motorrads 3 zu dem Kraftfahrzeug 2, und
- vorbestimmten Vordermann-Regler-Parametern r1
eine Vordermann-Regler-Beschleunigung a1 des Kraftfahrzeugs 2 zu bestimmen und zu der zweiten Soll-Beschleunigung-Bestimmungseinheit 55 auszugeben.

Der Multiobjekt-Regler 52 ist in der in Figur 1 dargestellten Situation, da sich hier kein Kraftfahrzeug auf der weiteren Fahrspur 6 befindet, ausgestaltet, um basierend auf:
- dem vorbestimmten Sollabstand s1 des Kraftfahrzeugs 2 zu dem zweiten Motorrad 4, das auf derselben Fahrspur 1 wie das Kraftfahrzeug 2 und auf Höhe des ersten Motorrads 3 vor dem Kraftfahrzeug 2 fährt,
- einem Ist-Abstand i2 des zweiten Motorrads 4 zu dem Kraftfahrzeug 2, und
- den vorbestimmten Vordermann-Regler-Parametern r1 des Vordermann-Reglers 51 eine erste Multiobjekt-Regler-Beschleunigung a2 des Kraftfahrzeugs 2 zu bestimmen und zu der ersten Soll-Beschleunigung-Bestimmungseinheit 54 auszugeben.

Der Vordermann-Regler 51 und der Multiobjekt-Regler 52 sind also in dem in Figur 1 dargestellten Fall bzw. in dieser Fahrsituation ausgestaltet, um jeweils die gleichen bzw. dieselben Vordermann-Regler-Parameter r1 zur Bestimmung der Vordermann-Regler-Beschleunigung und der ersten Multiobjekt-Regler-Beschleunigung a1, a2 zu nutzen.

Gleiches gilt für den Sollabstand s1, der jeweils von dem Vordermann-Regler 51 und dem Multiobjekt-Regler 52 zur Bestimmung der Vordermann-Regler-Beschleunigung und der Multiobjekt-Regler-Beschleunigung a1, a2 genutzt wird.

Das Kraftfahrzeug 2 weist eine zu dem Fahrassistenzsystem 5 verbundene (nicht dargestellte) Objekterkennungseinheit auf, die ausgestaltet ist, um die Motorräder 3, 4 in dem Umfeld des Kraftfahrzeugs 2 zu erkennen, den ersten und den zweiten Ist-Abstand i1, i2 zu bestimmen und zu dem Fahrassistenzsystem 5 auszugeben.

Der Multiobjekt-Regler 52 bestimmt die erste Multiobjekt-Regler-Beschleunigung a2 jedoch nur bzw. ausschließlich dann, wenn sich kein vorbestimmtes Objekt, hier ein weiteres Kraftfahrzeug, auf der weiteren Fahrspur 6 im Umfeld des Kraftfahrzeugs 2 befindet.

Befindet sich jedoch ein weiteres Kraftfahrzeug auf der weiteren Fahrspur 6 im Umfeld des Kraftfahrzeugs 2 oder schert von dieser Fahrspur 6 auf die Fahrspur 1 ein (beides nicht dargestellt), so ist der Multiobjekt-Regler 52 ausgestaltet, um basierend auf:
- einem vorbestimmten Sollabstand s2 des Kraftfahrzeugs 2 zu dem weiteren Kraftfahrzeug,
- einem Ist-Abstand i3 zu dem weiteren Kraftfahrzeug, und
- vorbestimmten Mulitobjekt-Regler-Parametern r2,
eine zweite Multiobjekt-Regler-Beschleunigung a3 des Kraftfahrzeugs 2 zu bestimmen und zu der ersten Soll-Beschleunigung-Bestimmungseinheit 54 auszugeben.

Der Vor-Vordermann-Regler 53 ist ausgestaltet, um in einer (nicht dargestellten) Situation, bei der vor den beiden Motorrädern 3, 4 ein weiteres Kraftfahrzeug fährt, basierend auf:
- einem vorbestimmten Sollabstand s3 des Kraftfahrzeugs 2 zu dem weiteren Kraftfahrzeug, das vor den beiden Motorrädern 3, 4 fährt,
- einem Ist-Abstand i4 zu dem weiteren Kraftfahrzeug, das vor den beiden Motorrädern 3, 4 fährt, und
- den vorbestimmten Vordermann-Regler-Parameter r1,
eine Vor-Vordermann-Regler-Beschleunigung a4 des Kraftfahrzeugs 2 zu bestimmen und zu der zweiten Soll-Beschleunigung-Bestimmungseinheit 55 auszugeben.

Die zweite Soll-Beschleunigung-Bestimmungseinheit 55 ist ausgestaltet, um eine Soll-Beschleunigung a5 des Kraftfahrzeugs 2 basierend auf der Vordermann-Regler-Beschleunigung a1 und der Vor-Vordermann-Regler-Beschleunigung a4 zu bestimmen und zu der ersten Soll-Beschleunigung-Bestimmungseinheit 54 auszugeben.

Die erste Soll-Beschleunigung-Bestimmungseinheit 54 ist ausgestaltet, um die an das Kraftfahrzeug auszugebende Soll-Beschleunigung a6 basierend auf einer Minimumauswahl aus der erste Multiobjekt-Regler-Beschleunigung a2 oder der zweiten Multiobjekt-Regler-Beschleunigung a3 und der von der zweiten Soll-Beschleunigung-Bestimmungseinheit 54 bestimmten Soll-Beschleunigung a5 zu bestimmen.

### Bezugszeichenliste

- 1: Fahrspur
- 2: Kraftfahrzeug
- 3: erstes Motorrad
- 4: zweites Motorrad
- 5: Fahrassistenzsystem
- 51: Vordermann-Regler
- 52: Multiobjekt-Regler
- 53: Vor-Vordermann-Regler
- 54: erste Soll-Beschleunigung-Bestimmungseinheit
- 55: zweite Soll-Beschleunigung-Bestimmungseinheit
- 6: weitere Fahrspur

- a1: Vordermann-Regler-Beschleunigung
- a2: erste Multiobjekt-Regler-Beschleunigung
- a3: zweite Multiobjekt-Regler-Beschleunigung
- a4: Vor-Vordermann-Regler-Beschleunigung
- a5: von der zweiten Soll-Beschleunigung-Bestimmungseinheit bestimmte Soll-Beschleunigung
- a6: zum Kraftfahrzeug auszugebende Soll-Beschleunigung

- F: Fahrtrichtung

- i1: Ist-Abstand des ersten Motorrads
- i2: Ist-Abstand des zweiten Motorrads
- i3: Ist-Abstand des weiteren Kraftfahrzeugs auf der weiteren Fahrspur
- i4: Ist-Abstand des weiteren Kraftfahrzeugs vor den beiden Motorrädern

- r1: Vordermann-Regler-Parameter
- r2: Mulitobjekt-Regler-Parameter
- s1: Sollabstand des Kraftfahrzeugs zu dem ersten bzw. zweiten Motorrad
- s2: Sollabstand des Kraftfahrzeugs zu dem weiteren Kraftfahrzeug auf der weiteren Fahrspur
- s3: Sollabstand des Kraftfahrzeugs zu dem weiteren Kraftfahrzeug vor den beiden Motorrädern

## Patentansprüche

1. Ein Fahrassistenzsystem (5) für ein Kraftfahrzeug (2), wobei das Fahrassistenzsystem (5) ausgestaltet ist, um eine Längsführung des Kraftfahrzeugs (2) durch Ausgabe einer Soll-Beschleunigung (a6) an das Kraftfahrzeug (2) automatisiert zu regeln, wobei das Fahrassistenzsystem (5) **gekennzeichnet ist durch**:
einen ersten Beschleunigungsregler (51), der ausgestaltet ist, um basierend auf einem vorbestimmten ersten Sollabstand (s1) des Kraftfahrzeugs (2) zu einem vorbestimmten ersten einspurigen Kraftfahrzeug (3), das auf einer selben Fahrspur (1) wie das Kraftfahrzeug (2) und direkt vor dem Kraftfahrzeug (2) fährt, und basierend auf einem ersten Ist-Abstand (i1) zu dem ersten einspurigen Kraftfahrzeug (3) eine erste Soll-Beschleunigung (a1) des Kraftfahrzeugs (2) zu bestimmen, und
einen zweiten Beschleunigungsregler (52), der ausgestaltet ist, um:
basierend auf einem vorbestimmten zweiten Sollabstand (s1) des Kraftfahrzeugs (2) zu einem vorbestimmten zweiten einspurigen Kraftfahrzeug (4), das auf derselben Fahrspur (1) wie das Kraftfahrzeug (2) und auf Höhe des vorbestimmten ersten einspurigen Kraftfahrzeugs (3) fährt, und basierend auf einem zweiten Ist-Abstand (i2) zu dem zweiten einspurigen Kraftfahrzeug (4) eine zweite Soll-Beschleunigung (a2) des Kraftfahrzeugs (2) zu bestimmen, und
basierend auf einem vorbestimmten dritten Sollabstand (s2) des Kraftfahrzeugs (2) zu einem vorbestimmten dritten Objekt, das auf einer anderen Fahrspur (6) wie das Kraftfahrzeug (2) fährt und/oder von der anderen Fahrspur (6) auf dieselbe Fahrspur (1) wie das Kraftfahrzeug (2) wechselt, eine dritte Soll-Beschleunigung (a3) des Kraftfahrzeugs (2) zu bestimmen, und
eine erste Soll-Beschleunigung-Bestimmungseinheit (54), die ausgestaltet ist, um basierend auf der ersten, der zweiten und der dritten Soll-Beschleunigung (a1, a2, a3) die an das Kraftfahrzeug (2) auszugebende Soll- Beschleunigung (a6) zu bestimmen.

2. Das Fahrassistenzsystem (5) nach Anspruch 1, wobei der erste und der zweite Beschleunigungsregler (51, 52) ausgestaltet sind, um jeweils eine im Wesentlichen selbe Parametrisierung (r1) zur Bestimmung der ersten und der zweiten Soll-Beschleunigung (a1, a2) zu nutzen.

3. Das Fahrassistenzsystem (5) nach einem der vorangegangenen Ansprüche, wobei das Fahrassistenzsystem (5) einen dritten Beschleunigungsregler (53) aufweist, der ausgestaltet ist, um basierend auf einem vorbestimmten vierten Sollabstand (s3) des Kraftfahrzeugs (2) zu einem vorbestimmten vierten Objekt, das auf derselben Fahrspur (1) wie das Kraftfahrzeug (2) und vor dem vorbestimmten ersten und dem vorbestimmten zweiten einspurigen Kraftfahrzeug (3, 4) fährt, eine vierte Soll-Beschleunigung (a4) des Kraftfahrzeugs zu bestimmen.

4. Das Fahrassistenzsystem (5) nach Anspruch 3, wobei das Fahrassistenzsystem (5) eine zweite Soll-Beschleunigung-Bestimmungseinheit (55) aufweist, die ausgestaltet ist, um eine fünfte Soll-Beschleunigung (a5) des Kraftfahrzeugs (2) basierend auf der ersten und der vierten Soll-Beschleunigung (a1, a4) zu bestimmen, und die erste Soll-Beschleunigung-Bestimmungseinheit (54) ausgestaltet ist, die an das Kraftfahrzeug (2) auszugebende Soll-Beschleunigung (a6) basierend auf der fünften Soll-Beschleunigung (a5) zu bestimmen.

5. Das Fahrassistenzsystem (5) nach einem der vorangegangenen Ansprüche, wobei die erste Soll-Beschleunigung-Bestimmungseinheit (54) ausgestaltet ist, um die an das Kraftfahrzeug (2) auszugebende Soll-Beschleunigung (a6) basierend auf einer Minimumauswahl zu bestimmen.

6. Das Fahrassistenzsystem (5) nach einem der vorangegangenen Ansprüche, wobei der zweite Beschleunigungsregler (52) ausgestaltet ist, um die zweite Soll-Beschleunigung (a2) ausschließlich dann zu bestimmen, wenn kein vorbestimmtes drittes Objekt vorhanden ist.

7. Ein Kraftfahrzeug (2) aufweisend ein Fahrassistenzsystem (5) gemäß einem der Ansprüche 1 bis 6.

8. Das Kraftfahrzeug (2) nach Anspruch 7, wobei das Kraftfahrzeug (2) eine zu dem Fahrassistenzsystem (5) verbundene Objekterkennungseinheit aufweist, die ausgestaltet ist, um die vorbestimmten einspurigen Kraftfahrzeuge (3, 4) in einem Umfeld des Kraftfahrzeugs (2) zu erkennen.

## Claims

1. A driving assistance system (5) for a motor vehicle (2), the driving assistance system (5) being configured to perform automated longitudinal control of the motor vehicle (2) by outputting a target acceleration (a6) to the motor vehicle (2), the driving assistance system (5) being **characterized by**:
a first acceleration controller (51) configured to, based on a predetermined first target distance (s1) of the motor vehicle (2) to a predetermined first single-track motor vehicle (3) traveling in a same lane (1) as the motor vehicle (2) and directly in front of the motor vehicle (2), and based on a first actual distance (i1) to the first single-track vehicle (3), determine a first target acceleration (a1) of the motor vehicle (2), and
a second acceleration controller (52) configured to:
based on a predetermined second target distance (s1) between the motor vehicle (2) and a predetermined second single-track motor vehicle (4) traveling in the same lane (1) as the motor vehicle (2) and at the height of the predetermined first single-track motor vehicle (3), and based on a second actual distance (i2) to the second single-track motor vehicle (4), a second target acceleration (a2) of the motor vehicle (2), and
based on a predetermined third target distance (s2) between the motor vehicle (2) and a predetermined third object traveling in a different lane (6) than the motor vehicle (2), and/or changing from the different lane (6) to the same lane (1) as the motor vehicle (2), determine a third target acceleration (a3) of the motor vehicle (2), and
a first target acceleration determination unit (54) configured to determine the target acceleration (a6) to be output to the motor vehicle (2) based on the first, the second and the third target acceleration (a1, a2, a3).

2. The driving assistance system (5) according to claim 1, wherein the first and the second acceleration controller (51, 52) are configured to each use substantially a same parameterization (r1) to determine the first and the second target acceleration (a1, a2).

3. The driving assistance system (5) according to any of the preceding claims, the driving assistance system (5) comprising a third acceleration controller (53) configured to, based on a predetermined fourth target distance (s3) of the motor vehicle (2) from a predetermined fourth object traveling in the same lane (1) as the motor vehicle (2) and in front of the predetermined first and predetermined second single-track motor vehicle (3, 4) determine a fourth target acceleration (a4) of the motor vehicle.

4. The driving assistance system (5) according to claim 3, wherein the driving assistance system (5) comprises a second target acceleration determination unit (55) configured to determine a fifth target acceleration (a5) of the motor vehicle (2) based on the first and the fourth target accelerations (a1, a4), and the first target acceleration determination unit (54) is configured to determine the target acceleration (a6) to be output to the motor vehicle (2) based on the fifth target acceleration (a5).

5. The driving assistance system (5) according to any of the preceding claims, wherein the first target acceleration determination unit (54) is configured to determine the target acceleration (a6) to be output to the motor vehicle (2) based on a minimum selection.

6. The driving assistance system (5) according to any of the preceding claims, wherein the second acceleration controller (52) is configured to determine the second target acceleration (a2) only when the predetermined third object is not present.

7. A motor vehicle (2) comprising a driving assistance system (5) according to any one of claims 1 to 6.

8. The motor vehicle (2) according to claim 7, wherein the motor vehicle (2) comprises an object recognition unit coupled to the driving assistance system (5), which is configured to recognize the predetermined single-track motor vehicles (3, 4) in the environment of the motor vehicle (2).

## Revendications

1. Système d'assistance à la conduite (5) pour un véhicule à moteur (2), le système d'assistance à la conduite (5) étant configuré pour effectuer un contrôle longitudinale automatisé du véhicule à moteur (2) en fournissant une accélération cible (a6) au véhicule à moteur (2), le système d'assistance à la conduite (5) étant **caractérisé par** :
un premier contrôleur d'accélération (51), étant configuré, sur la base d'une première distance cible prédéterminée (s1) entre le véhicule à moteur (2) et un premier véhicule monotrace (3) prédéterminé, qui circule sur la même voie (1) que le véhicule à moteur (2) et directement devant le véhicule à moteur (2), et sur la base d'une première distance réelle (i1) par rapport au premier véhicule monotrace (3) pour déterminer une première accélération cible (a1) du véhicule à moteur (2), et
un second contrôleur d'accélération (52), étant configuré pour :
sur la base d'une seconde distance cible prédéterminée (s1) entre le véhicule à moteur (2) et un second véhicule monotrace prédéterminé (4), qui circule sur la même voie (1) que le véhicule à moteur (2) et à la hauteur du premier véhicule automobile monotrace (3) prédéterminé, et sur la base d'une seconde distance réelle (i2) par rapport au second véhicule automobile monotrace (4), une seconde accélération cible (a2) pour déterminer le véhicule à moteur (2), et
sur la base d'une troisième distance cible prédéterminée (s2) entre le véhicule automobile (2) et un troisième objet prédéterminé, qui circule sur une voie différente (6) que le véhicule à moteur (2), et/ou passe de la voie différente (6) à la même voie (1) que le véhicule à moteur (2), déterminer une troisième accélération cible (a3) du véhicule à moteur (2), et
une première unité de détermination d'accélération cible (54), étant configuré pour déterminer l'accélération cible (a6) à fournir au véhicule à moteur (2) sur la base de la première, de la seconde et de la troisième accélération cible (a1, a2, a3).

2. Le système d'assistance à la conduite (5) selon la revendication 1, dans lequel le premier et le second contrôleur d'accélération (51, 52) sont configurés pour utiliser substantiellement le même paramétrage (r1) afin de déterminer la première et la seconde accélération cible (a1, a2).

3. Le système d'assistance à la conduite (5) selon l'une des revendications précédentes, le système d'assistance à la conduite (5) comprenant un troisième contrôleur d'accélération (53) configuré pour, sur la base d'une quatrième distance cible prédéterminée (s3) entre le véhicule à moteur (2) et un quatrième objet prédéterminé, qui circule sur la même voie (1) que le véhicule à moteur (2) et devant le premier et le second véhicule monotrace (3, 4), déterminer une quatrième accélération cible (a4) du véhicule à moteur.

4. Le système d'assistance à la conduite (5) selon la revendication 3, dans lequel le système d'assistance à la conduite (5) comprend une seconde unité de détermination d'accélération cible (55), qui est configurée pour déterminer une cinquième accélération cible (a5) du véhicule à moteur (2) sur la base de la première et la quatrième accélération cible (a1, a4), la première unité de détermination d'accélération cible (54) étant configurée pour déterminer l'accélération cible (a6) à fournir au véhicule à moteur (2) sur la base de la cinquième accélération cible (a5).

5. Le système d'assistance à la conduite (5) selon l'une des revendications précédentes, dans lequel la première unité de détermination d'accélération cible (54) est configuré pour déterminer l'accélération cible (a6) à fournir au véhicule à moteur (2) sur la base d'une sélection minimale.

6. Le système d'assistance à la conduite (5) selon l'une des revendications précédentes, dans lequel le second contrôleur d'accélération (52) est configuré pour déterminer la seconde accélération cible (a2) uniquement lorsqu'aucun troisième objet prédéterminé n'est présent.

7. Véhicule à moteur (2) comprenant un système d'assistance à la conduite (5) selon l'une quelconque des revendications 1 à 6.

8. Le véhicule à moteur (2) selon la revendication 7, **caractérisé en ce que** le véhicule à moteur (2) comprend une unité de reconnaissance d'objets couplée au système d'assistance à la conduite (5), qui est configurée pour détecter les véhicules automobiles monotraces prédéterminés (3, 4) dans l'environnement du véhicule à moteur (2).
